# FASCICULE DE BREVET EUROPEEN

(11) **EP 3 083 876 B1**
(45) Date de publication et mention de la délivrance du brevet: **07.11.2018**
(21) Numéro de dépôt: 14805856.3
(22) Date de dépôt: 27.11.2014
(51) Int. Cl.: C09K 8/588, C10G 33/04, E21B 21/06, C02F 1/52

(54) **TRAITEMENT DES EAUX DE PRODUCTION EN RECUPERATION ASSISTEE PAR INTRODUCTION DE CATIONS TETRAVALENTS**
BEHANDLUNG VON ABWASSER IN EINER ERWEITERTEN RÜCKGEWINNUNG DURCH EINFÜHRUNG TETRAVALENTER KATIONEN
TREATMENT OF PRODUCED WATER IN ENHANCED RECOVERY BY INTRODUCING TETRAVALENT CATIONS

(30) Priorité: 17.12.2013 FR 1362791
(43) Date de publication de la demande: 26.10.2016
(73) Titulaire: IFP Energies nouvelles, 92500 Rueil-Malmaison (FR)
(72) Inventeur: HENAUT, Isabelle, F-92500 Rueil-Malmaison (FR); ARGILLIER, Jean-François, F-92500 Rueil-Malmaison (FR)
(74) Mandataire: IFP Energies nouvelles
(86) Numéro de dépôt international: PCT/EP2014/075845
(87) Numéro de publication internationale: WO 2015/090898

(56) Documents cités:
- FR-A1- 2 984 397
- US-A- 4 488 601
- US-A1- 2010 314 114

## Description

La présente invention concerne le domaine de la récupération assistée à l'aide d'un fluide de balayage comportant au moins un polymère et de l'optimisation du traitement des eaux de production.

Depuis la crise mondiale de l'énergie, il est devenu essentiel de pouvoir récupérer le maximum d'hydrocarbures contenus dans des formations souterraines. La méthode la plus couramment utilisée consiste à injecter *via* un puits injecteur un fluide aqueux (en général de l'eau ou de la saumure). Ce fluide balaye la formation souterraine pour forcer les hydrocarbures à sortir des pores de la roche où ils se trouvent piégés. Des puits producteurs permettent de récupérer un effluent de production comprenant un mélange d'eau, de sels et d'hydrocarbures. Cette méthode est connue sous le nom de méthode de récupération assistée de pétrole ou "Enhanced Oil Recovery (EOR) en terminologie anglo-saxonne.

Il existe plusieurs méthodes de récupération assistée de pétrole. Lorsque le fluide injecté, aussi appelé fluide de balayage, est additionné de composés, on parle de récupération assistée tertiaire. Ces composés chimiques sont des polymères, tensioactifs, des composés alcalins, ou des mélanges de ces composés. Par rapport à une simple injection d'eau ou de saumure, l'intérêt de la présence d'un polymère est d'augmenter la viscosité du fluide de balayage et par conséquent d'améliorer le rapport de mobilité entre le fluide injecté et les hydrocarbures en place dans la formation souterraine. Le rendement de récupération en hydrocarbures est augmenté grâce à une meilleure efficacité du balayage de la formation. Les polymères utilisés dans cette méthode sont généralement des polymères de fortes masses moléculaires utilisées pour leurs propriétés viscosifiantes à concentrations modérées. Le fluide injecté peut en outre contenir des tensioactifs à forte concentration (de 0,5 a 10 g/l).

L'utilisation de polymères dans la récupération assistée tertiaire pose aussi des problèmes pratiques. Au niveau des puits producteurs, on récupère un mélange fluide aqueux/hydrocarbures sous forme d'une émulsion dont le rapport eau/hydrocarbure évolue en fonction de la durée de production. Au bout d'un certain temps d'exploitation (appelé "breakthrough" du polymère, ou temps de perçage), du polymère mélangé à la phase aqueuse du fluide de balayage est récupéré lors du pompage dans les tubes de production. La concentration en polymère dans l'effluent de production est variable mais néanmoins suffisante pour en perturber le pompage. Le polymère a, en effet, la propriété d'augmenter la viscosité du fluide de balayage, il augmente donc également la viscosité et les propriétés viscoélastiques de l'effluent de production. Plus l'effluent de production est visqueux, plus les pertes de charge et la consommation énergétique de pompage augmente au cours de la production du gisement. L'augmentation de la viscosité du fluide de production peut aussi entraîner le bouchage des tubes de production nécessitant l'arrêt temporaire de l'exploitation de la formation souterraine. Plus l'effluent de production a des propriétés visqueuses élevées, plus il crée des difficultés de pompage, ainsi qu'avec les autres équipements nécessaires aux traitements de surface du fluide.

La présence de polymère dans le fluide de production rend plus difficile la séparation des différents fluides (huile/gaz/eau) et, en particulier, les traitements secondaires de l'eau. Lorsque l'effluent de production arrive en surface, il est traité dans une unité de surface. Cette unité permet de séparer les différents fluides, gaz, huile et eau. A l'issue du traitement de surface, les hydrocarbures sont prêts à être raffinés. L'eau est traitée et dépolluée afin de minimiser les rejets de produits toxiques dans l'environnement. La présence du polymère dans les fluides produits, comme il est rapporté dans la publication SPE 65390 (2001) "Emulsification and stabilization of ASP Flooding Produced liquid" by Wu Di et al, peut entraîner la stabilisation des émulsions dans les fluides produits et poser des problèmes au niveau des procédés de traitement de surface, au niveau de la séparation eau/huile/gaz et en particulier, au niveau des procédés de traitement secondaires de l'eau.

Le but de la présente invention est de proposer un procédé de récupération assistée dans lequel les étapes de traitement en surface de l'eau de production sont optimisées.

Ainsi, l'invention concerne un procédé de récupération assistée d'hydrocarbures contenus dans un réservoir géologique tel que défini par la revendication 1. L'agent de précipitation peut comporter du ZrCl4. On peut injecter l'agent de précipitation en aval de l'étape de séparation primaire hydrocarbures/eau.
L'agent de précipitation peut être injecté en solution aqueuse.
La teneur de l'agent de précipitation en solution aqueuse est comprise entre 50 et 5000 ppm, préférentiellement environ 150 ppm.
On peut injecter dans ledit effluent un agent anti corrosion en mélange avec ledit agent de précipitation.
Le fluide de balayage peut comporter outre le polymère, au moins un tensioactif.
Le fluide de balayage peut comporter outre le polymère, au moins un tensioactif et au moins un alcalin, par exemple du Na2CO3.
On peut ajouter au moins un acide dans le fluide aqueux provenant dudit effluent après l'ajout dudit agent de précipitation comportant des cations tétravalents.

La présente invention sera mieux comprise et ses avantages apparaîtront plus clairement à la lecture de la description qui suit d'une mise en oeuvre du procédé, nullement limitative, illustrée par plusieurs exemples.

Par "hydrocarbure(s)", on entend au sens de la présente invention des produits pétrolifères tels que du pétrole ou de l'huile brute, du pétrole ou de l'huile extra-lourd(e), des sables asphalténiques, des schistes bitumineux et des gaz présents dans une formation souterraine.

Par "effluent de production" ou "fluide de production", on entend au sens de la présente invention le fluide récupéré dans un puits de production après le balayage d'une formation souterraine. Ce fluide comprend, en quantité variable, les hydrocarbures extraits des pores de la formation souterraine et des composants du fluide de balayage, tels que des polymères, des tensio-actifs, des composés alcalins, de l'eau et/ou de la saumure.

Une opération de récupération assistée consiste conventionnellement à forer un puits dans un réservoir pour servir de puits injecteur. Au moins un autre puits est foré également dans le réservoir, à une distance déterminée du puits injecteur pour servir de puits producteur. Les deux puits sont classiquement cuvelés par un tube cimenté dans la formation. La colonne de production est couronnée en surface par l'installation de tête de puits d'où part une conduite de surface ("flowline") qui collecte l'effluent produit. La "flowline" conduit généralement l'effluent de production vers une installation de traitement qui peut comporter des moyens de dilution, de séparation et/ou de filtration.

En sortie de cette installation, un fluide de rejet, essentiellement aqueux, ou eau de séparation, est amené vers une installation de traitement des eaux de rejet. A la sortie de ce traitement d'eau, une eau de qualité normée est évacuée ou injectée par un puits adéquat.

Pour améliorer le traitement et la qualité des eaux de rejet, on injecte l'additif de précipitation dans l'effluent aqueux en aval de la séparation des hydrocarbures, ou en amont du séparateur si l'effluent contient une forte proportion d'eau (fort "water-cut) qui est alors la phase principale continue.

L'agent de précipitation est choisi pour sa charge positive qui permet de précipiter le polymère anionique, permettant le piégeage des gouttes d'huiles dont la teneur dans le reste de l'effluent est significativement diminuée. La morphologie compacte du précipité obtenu avec un agent tétravalent permet une filtration avec un colmatage plus limité qu'avec le précipité plus dispersé obtenu avec un additif trivalent.

Le ou les polymère(s) hydrosoluble(s) présent(s) dans le fluide de production sont des polymères ou copolymères anioniques hydrosolubles à base d'acrylamide comme les polyacrylamides partiellement hydrolysés appelé HPAM, qui sont des copolymères d'acrylamide et d'acrylate de sel (type sodium), des copolymères d'acrylamide avec des monomères sulfonés tel que l'AMPS (2-acrylamido-2méthylpropane sulfonate) ou des copolymères d'acrylamide avec des monomères de type PVP (poly vinyl pyrrolidone), les copolymères d'acrylamide et d'acrylique. Les polymères peuvent être fonctionnalisés par des groupements sulfonates, carboxylates, amines, imines, ammonium, carboxamides, imides, hydroxyles, acétyles. La masse moléculaire du polymère utilisé est généralement supérieure à 500000 et préférentiellement supérieure à 10000000 g/mol. De manière préférée, la masse moléculaire du polymère est comprise entre 500000 et 30000000 g/mol. La concentration en polymère dans la solution aqueuse est choisie pour avoir un bon rapport de mobilité en fonction de l'huile et des conditions réservoir. Elle est comprise entre 200 et 5000 ppm (parties par million) en poids et de préférence entre 500 et 3000 ppm en poids de la phase aqueuse.

La présente invention s'adresse à toutes les méthodes de récupération assistée de pétrole qui comprennent une étape d'injection d'un fluide de balayage comportant au moins un polymère, comme les procédés combinant outre l'injection de polymère, l'injection de tensioactif, et/ou de composés alcalins. Ces procédés sont connus et dénommés: SP ("Surfactant/Polymer"), AP (Alcalin/Polymer) et ASP (Alcalin/Surfactant/Polymère)).

### Exemples :

### Solution A :

- Eau saline (7,5 g/l de NaCl) avec 1% d'un tensioactif (Triton X405).
- On chauffe un hydrocarbure brut HC défini par :17% massique d'asphaltènes au pentane, un degré API de 8,5 et une viscosité de 386 Pas à 20°C, à l'étuve pendant 2-3 heures à 60°C.
- Préparation d'une émulsion mère 70/30 (Brut/eau). (105 g du brut + 45 g de la solution saline).
- Agitation du mélange avec l'ultraturrax à 13500 tour/min pendant 5 minutes dans un bain marie réglé à 60°C.

### Solution B:

Préparation d'une émulsion avec 0,5 g/l de brut et 0,25 g/l d'additif pour la récupération assistée: polymère, tensioactif, alcalin, ou leurs mélanges.
- Préparation d'une eau saline avec 7,5 g/l de NaCl et la teneur choisie en tensioactif.
- Mettre en agitation le mélange pendant 24 h à 200 tour/min afin de solubiliser l'additif.

### Solution C:

- On pèse sur une balance de précision 0,7 g/l de la solution A préparée.
- On ajoute cette quantité sur la solution B préparée.
- On agite le mélange à 200 tour/min. L'émulsion est maintenant prête à être utilisée en test.

L'agent de précipitation est introduit au début d'un essai de type "jar test". Cet essai utilise le même équipement que celui préconisé dans la norme ASTM D2035. Il comprend les étapes suivantes :
- 370 tour/min pendant 1 minute,
- 70 tour/min pendant 15 minutes,
- 20 minutes en conditions statiques.

Après cette dernière étape, on prélève un échantillon de liquide surnageant et on en mesure la teneur en hydrocarbures par extraction au dichlorométhane et dosage UV.

### Essai 1:

Dans une eau de production préparée avec le protocole décrit ci-dessus et contenant :
- 7,5 g/l de NaCl,
- 500 ppm de brut lourd HC dispersé sous forme de gouttes de 15 µm de diamètre,
- 250 ppm de HPAM 3630S (fabriqué par SNF Floerger),
- on ajoute un même nombre de cations (0,325 10⁻⁴ mol/l): soit Al₂(SO₄)₃ (55 ppm), soit de ZrCl4 (75 ppm) dans deux échantillons que l'on soumet à un "jar test". Leur aspect ainsi que leur teneur résiduelle en hydrocarbures sont rassemblées Tableau1. La graduation d'aspect de pureté utilisée est la suivante, du plus chargé en brut au plus propre:
Opaque - Trouble - Trouble clair - Clair - Transparent

**Tableau 1**

| **Cations(0,325 10⁻⁴ mol/l)** | **Aspect avant test** | **Aspect après test** | **Teneur en brut après test** |
|---|---|---|---|
| Al3+ | Opaque | Trouble | 192 ppm |
| Zr 4+ | | Trouble clair | 82 ppm |

### Essai 2:

Dans une eau de production contenant :
- 7,5 g/l de NaCl,
- 500 ppm de brut lourd HC dispersé sous forme de gouttes de 15 µm de diamètre,
- 250 ppm de HPAM 3630S (fabriqué par SNF Floerger),
- on ajoute un même nombre de cations (0,65 10⁻⁴ mol/l) soit Al₂(SO₄)₃ (111 ppm) et de ZrCl4 (150 ppm) dans deux échantillons que l'on soumet à un jar test. Leur aspect ainsi que leur teneur résiduelle en hydrocarbures sont rassemblées au Tableau 2.

**Tableau 2**

| **Cations(0,65 10⁻⁴mol/l)** | **Aspect avant test** | **Aspect après test** | **Teneur en brut après test** |
|---|---|---|---|
| Al3+ | Opaque | Clair | 71 ppm |
| Zr 4+ | | Transparent | 14 ppm |

Après traitement, avec respectivement 150 ppm de ZrCl4 et 111 ppm de Al2(SO4)3, les eaux de production (300 ml) ont été filtrées sur une cellule de filtration AMICON équipée d'une membrane nuclepore comportant des pores de 5 µ. La pression est fixée à 0,1 bar et la masse filtrée est mesurée au cours de la filtration. dans le premier cas, il ne faut que 2 minutes pour récupérer les 300 ml d'eau filtrée, alors que dans le second cas, un colmatage se produit en moins d'une minute et seuls 100g de saumure sont récupérés. Cela démontre que la phase surnageante après traitement au ZrCl4 est très propre.

### Essai 3:

Dans une eau de production contenant :
- 7,5 g/l de NaCl,
- 500 ppm de brut lourd HC dispersé sous forme de gouttes de 15 µm de diamètre,
- 250 ppm de HPAM sulfoné 5115 (fabriqué par SNF Floerger),
- on ajoute un même nombre de cations (0,65 10⁻⁴ mol/l) soit Al₂(SO₄)₃ (111 ppm) et de ZrCl4 (150 ppm) dans deux échantillons que l'on soumet à un jar test. Leur aspect ainsi que leur teneur résiduelle en hydrocarbures sont rassemblées au Tableau 3.

**Tableau 3**

| **Cations(0,65 10⁻⁴mol/l)** | **Aspect avant test** | **Aspect après test** | **Teneur en brut après test** |
|---|---|---|---|
| Al3+ | Opaque | Trouble | 170 ppm |
| Zr 4+ | | Transparent | 5 ppm |

### Essai 4: conditions SP

Dans une eau de production contenant :
- 7,5 g/l de NaCl,
- 500 ppm de brut lourd HC dispersé sous forme de gouttes de 15µm de diamètre,
- 250 ppm de HPAM 3630S,
- 500 ppm de tensioactif (AGES fabriqué par Solvay)),
- on ajoute 0,65 10⁻⁴ mol/l de ZrCl4 (150ppm) dans deux échantillons que l'on soumet à un jar test. Leur aspect ainsi que leur teneur résiduelle en hydrocarbures sont rassemblées au tableau 1.

**Tableau 4**

| **Cations(0,65 10⁻⁴mol/l) Zr4+** | **Aspect avant test** | **Aspect après test** | **Teneur en brut après test** |
|---|---|---|---|
| 500 ppm AGES | Opaque | Transparent | 7 ppm |

Il est clair, à la lumière de ces essais, que l'adjonction d'un additif comportant des cations tétravalents dans un effluent contenant une eau de production résultant de récupération assistée, est efficace en particulier pour la précipitation des hydrocarbures résiduels. de préférence, on utilise du ZrCl4.

### Essai 5: conditions ASP

Dans une eau de production contenant :
- 7,5 g/l de NaCl,
- 500 ppm de brut lourd HC dispersé sous forme de gouttes de 15µm de diamètre,
- 250 ppm de HPAM 3630S,
- 500 ppm de tensioactif (AGES fabriqué par Solvay),
- 2500ppm de Na2CO3
   - on ajoute 1,3 10⁻⁴ mol/l de ZrCl4 (300ppm) à l'échantillon que l'on soumet ensuite à une acidification (ajout de 1700 ppm de HCl à 35%) et à un "jar test".

L'aspect ainsi que la teneur résiduelle en hydrocarbures sont rassemblées au tableau 5.

**Tableau 5**

| **Cations(0,65 10⁻⁴mol/l) Zr4+** | **Aspect avant test** | **Aspect après test** | **Teneur en brut après test** |
|---|---|---|---|
| 500 ppm AGES ; 2500ppm Na2CO3 | Opaque | Trouble clair | 160 ppm |

## Revendications

1. Procédé de récupération assistée d'hydrocarbures contenus dans un réservoir géologique dans lequel :
- on injecte dans ledit réservoir un fluide de balayage, comprenant au moins un polymère hydrosoluble à base d'acrylamide dans une solution aqueuse, ledit polymère étant anionique, de manière à déplacer lesdits hydrocarbures vers au moins un puits producteur,
- on collecte, par ledit puits producteur, un effluent de production comportant en quantité variable lesdits hydrocarbures et des composants dudit fluide de balayage,
- on injecte, au moins dans un fluide aqueux résultant d'une étape de séparation primaire hydrocarbures/eau appliquée audit effluent de production, ou bien dans un fluide aqueux en amont du séparateur si ledit effluent contient une forte proportion d'eau qui est alors la phase principale continue, au moins un agent de précipitation pour la précipitation dudit polymère, ladite précipitation entrainant le piégeage desdits hydrocarbures sous forme de gouttes, ledit agent de précipitation comportant des cations tétravalents, la teneur dudit agent de précipitation en solution aqueuse étant comprise entre 50 et 5000 ppm, et la concentration dudit polymère dans ledit fluide aqueux étant comprise entre 200 et 5000 ppm en poids de la phase aqueuse.

2. Procédé selon la revendication 1, dans lequel ledit agent de précipitation comporte du ZrCl4.

3. Procédé selon l'une des revendications précédentes, dans lequel on injecte dans ledit effluent un agent anti corrosion en mélange avec ledit agent de précipitation.

4. Procédé selon l'une des revendications précédentes, dans lequel ledit fluide de balayage comporte outre ledit polymère, au moins un tensioactif.

5. Procédé selon la revendication 4, dans lequel ledit fluide de balayage comporte outre ledit polymère, au moins ledit tensioactif et au moins un alcalin, par exemple du Na2CO3.

6. Procédé selon la revendication 5, dans lequel on ajoute au moins un acide dans ledit fluide aqueux provenant dudit effluent après l'ajout dudit agent de précipitation comportant des cations tétravalents.

## Patentansprüche

1. Verfahren zur unterstützten Rückgewinnung von Kohlenwasserstoffen, die in einem geologischen Reservoir enthalten sind, bei dem:
- in das Reservoir ein Spülfluid, umfassend mindestens ein wasserlösliches Polymer auf Basis von Acrylamid in einer wässrigen Lösung, wobei das Polymer anionisch ist, injiziert wird, um die Kohlenwasserstoffe zu mindestens einem Förderbohrloch zu verlagern,
- durch das Förderbohrloch ein Förderabfluss gesammelt wird, umfassend in variabler Menge die Kohlenwasserstoffe und Komponenten des Spülfluids,
- mindestens in ein wässriges Fluid, das aus einem primären Trennungsschritt Kohlenwasserstoffe/Wasser stammt, der am Förderabfluss angewandt wird, oder auch in ein wässriges Fluid stromaufwärts zu dem Separator, wenn der Abfluss einen starken Wasseranteil enthält, der nun die kontinuierliche Hauptphase ist, mindestens ein Fällmittel zum Ausfällen des Polymers injiziert wird, wobei das Ausfällen zum Einfangen der Kohlenwasserstoffe in Form von Tropfen führt, wobei das Fällmittel tetravalente Kationen umfasst, wobei der Gehalt des Fällmittels in wässriger Lösung zwischen 50 und 5.000 ppm beträgt, und die Konzentration des Polymers in dem wässrigen Fluid zwischen 200 und 5.000 ppm an Gewicht der wässrigen Phase beträgt.

2. Verfahren nach Anspruch 1, bei dem das Fällmittel ZrCl₄ umfasst.

3. Verfahren nach einem der vorhergehenden Ansprüche, bei dem in den Abfluss ein Korrosionsschutzmittel im Gemisch mit dem Fällmittel injiziert wird.

4. Verfahren nach einem der vorhergehenden Ansprüche, bei dem das Spülfluid außer dem Polymer mindestens ein Tensid umfasst.

5. Verfahren nach Anspruch 4, bei dem das Spülfluid außer dem Polymer mindestens das Tensid und mindestens ein alkalisches Mittel, beispielsweise Na₂CO₃, umfasst.

6. Verfahren nach Anspruch 5, bei dem mindestens eine Säure zu dem von dem Abfluss stammenden wässrigen Fluid nach dem Hinzufügen des Fällmittels, umfassend tetravalente Kationen, hinzugefügt wird.

## Claims

1. A method for enhanced recovery of hydrocarbons contained in a geological reservoir, comprising:
- injecting into said reservoir a sweep fluid comprising at least one water-soluble polymer based on acrylamide in an aqueous solution, said polymer being anionic, so as to displace said hydrocarbons towards at least one production well,
- collecting, through said production well, a production effluent comprising in variable amounts said hydrocarbons and components of said sweep fluid,
- injecting, at least in an aqueous fluid resulting from a primary hydrocarbon/water separation stage applied to said production effluent, or in an aqueous fluid upstream from the separator if said effluent contains a large proportion of water, which is then the continuous main phase, at least one precipitating agent for precipitation of said polymer, said precipitation causing trapping of said hydrocarbons in form of drops, said precipitating agent comprising tetravalent cations, the proportion of said precipitating agent in aqueous solution ranging between 50 and 5000 ppm, and the concentration of said polymer in said aqueous fluid ranging between 200 and 5000 ppm by weight of aqueous phase.

2. A method as claimed in claim 1, wherein said precipitating agent comprises ZrCl4.

3. A method as claimed in any one of the previous claims, wherein an anticorrosion agent in admixture with said precipitating agent is injected into said effluent.

4. A method as claimed in any one of the previous claims, wherein said sweep fluid comprises at least one surfactant in addition to said polymer.

5. A method as claimed in claim 4, wherein said sweep fluid comprises at least said surfactant and at least one alkaline compound, Na2CO3 for example, in addition to said polymer.

6. A method as claimed in claim 5, wherein at least one acid is added to said aqueous fluid from said effluent after addition of said precipitating agent comprising tetravalent cations.
